# EUROPÄISCHE PATENTANMELDUNG

(11) **EP 1 995 567 A1**
(43) Veröffentlichungstag der Anmeldung: **26.11.2008**
(21) Anmeldenummer: 07108837.1
(22) Anmeldetag: 24.05.2007
(51) Int. Cl.: G01D 5/347

(54) **Optoelektronisches lagemessverfahren und optoelektronische lagemesseinrichtung**

(71) Anmelder: Leica Geosystems AG, 9435 Heerbrugg (CH)
(72) Erfinder: Vokinger, Urs, CH-9434, Au (CH); Bernhard, Heinz, CH-9442, Berneck (CH); Amann, Herr Wemer, Feldkirch A-6800 (CH)
(74) Vertreter: Büchel, Kaminski & Partner

(57) **Zusammenfassung**

Die Erfindung betrifft ein optoelektronisches Lagemessverfahren zum Bestimmen einer Lage, insbesondere eines Winkels oder einer Länge, eines Codeträgers (10), der einen Positionscode (11) trägt und relativ zu einem Erfassungselement (30) mit einem Freiheitsgrad, insbesondere rotatorisch oder entlang einer Achse, beweglich ist. Das Erfassungselement (30) weist mehrere lichtempfindliche Empfangsbereiche (31), insbesondere einen Sensorarray (35), auf.

Bei dem Lagemessverfahren erfolgt ein Erzeugen einer von der Lage des Codeträgers (10) abhängigen Projektion eines Teiles des Positionscodes (11), wobei das Erzeugen mindestens ein Emittieren von optischer Strahlung auf den Codeträger (10) und ein Erfassen der Projektion durch das Erfassungselement (30) beinhaltet, und ein Ableiten der Lage des Codeträgers (10) relativ zum Erfassungselement (30) aus der Projektion. Beim Erzeugen der Projektion erfolgt ein gezieltes Fokussieren wenigstens eines Teiles der optischen Strahlung auf die Empfangsbereiche (31).

## Beschreibung

Die Erfindung betrifft ein optoelektronisches Lagemessverfahren nach dem Oberbegriff des Anspruchs 1 und eine optoelektronische Lagemesseinrichtung nach dem Oberbegriff des Anspruchs 6.

Das Bestimmen von Richtungen, Winkeln und Längen als Lagen ist in vielen Anwendungsbereichen, wie beispielsweise in der geodätischen und industriellen Vermessung, gefordert. Entwicklungen in der Winkelmesstechnik führen über mechanische Ablesevorgänge bis zur vollautomatisierten Winkelmessung nach dem heutigen Stand der Technik.

Bekannte automatisierte Lagemessvorrichtungen umfassen im Allgemeinen einen Codeträger und eine Abtasteinrichtung. Bei Winkelmesseinrichtungen ist der Codeträger üblicherweise relativ zur Abtasteinrichtung um eine Achse drehbar ausgebildet, wobei dann eine Winkellage des Codeträgers die zu messende Grösse darstellt. Der Codeträger kann zum Beispiel eine Teilung oder Codierung zur Positionsbestimmung aufweisen, wobei die Codierung auf einer Oberfläche oder Mantelfläche des Codeträgers aufgebracht sein kann.

Zur automatischen Erfassung der Lage wird der relativ zur Abtasteinrichtung bewegbare Codeträger mittels unterschiedlicher Techniken abgetastet. Bekannte Abtastverfahren sind elektronisch-magnetische, elektronische und optisch-elektronische Verfahren. Die folgenden Ausführungen beziehen sich auf optisch-elektronische Abtastverfahren und Abtasteinrichtungen, die insbesondere eine Beleuchtungseinrichtung und einen Detektor aufweisen.

Zur Bestimmung beispielsweise von Winkelstellungen von 0° bis 360° ist die Codierung üblicherweise in einem Vollkreis angeordnet. Die Winkelauflösung des Vollkreises bestimmt sich nach Art der Codierung und nach der zum Lesen der Codierung eingesetzten Abtasteinrichtung. So wird beispielsweise durch Aufbringen eines Codes in mehreren Spuren oder durch eine feinere Teilung die Winkelauflösung gesteigert, wobei die erreichbare Auflösung aus fertigungs-und kostentechnischen Gründen beschränkt ist. Zum Lesen des Codes sind z.B. Anordnungen von einem oder mehreren Detektoren bekannt. CCD-Zeilen-Arrays oder CCD-Flächen-Arrays können beispielsweise solche Detektoren darstellen.

Die schweizerische Patentschrift CH 658514 A5 offenbart eine solche Vorrichtung zum Messen einer Winkellage. Dabei wird eine Marke, deren Lage in Bezug auf eine Fläche von Sensoren die zu messende Grösse darstellt, auf diese Fläche abgebildet. Die Ausgangssignale der Sensoren werden in eine Auswerteschaltung geführt, die die Verteilung der Intensität der durch die Sensoren erzeugten Signale sequentiell ermittelt. Aus der Intensitätsverteilung kann die Lage der Marke in Bezug auf die Fläche von Sensoren abgeleitet werden.

Das Ausmass einer Lagemesseinrichtung für geodätische Geräte ist vorteilhaft gering zu halten. Um eine entsprechend kleine und wenig aufwendige Bauweise zu erlauben, werden seit einiger Zeit die Beleuchtungseinrichtung und der Detektor der Lagemesseinrichtung auf einer gemeinsamen, elektrisch versorgten Platine angeordnet, und nicht wie zuvor ober-und unterhalb eines Codeträgers jeweils auf einer separaten elektrisch versorgten Platine. Bei Lagemesseinrichtungen des Standes der Technik mit einer nebeneinander liegenden Anordnung des Detektors und der Beleuchtungseinrichtung werden die emittierten Strahlen beispielsweise durch ein Umlenkelement mit zwei planen, reflektierenden Flächen so umgelenkt, dass eine Abbildung des Codes durch den im Strahlgang nachgeordneten Codeträger auf dem Detektor erzeugt wird. Optional können dabei die emittierten Strahlen mittels einer der Beleuchtungsquelle direkt nachgeordneten Optik kollimiert werden.

Beispielsweise zeigt die US-Patentschrift US 7,145,127 B2 ein Umlenkelement für eine Lagemesseinrichtung, wobei das Umlenkelement zwei gegeneinander ausgerichtete Flächen zur zweifachen Reflexion der emittierten Strahlen aufweist und einen auf ein Sensor abbildbaren Code trägt und somit zusätzlich als Codeträger ausgebildet ist.

Die Genauigkeit einer derartigen Lagemessung hängt von mehreren Faktoren ab. Bei einem relativ zum Detektor bewegten Codeträger verschmiert die Schattenprojektion des Codes auf den Detektor je nach Belichtungszeit entsprechend. Um etwa eine Genauigkeit der relativen Lage des Codeträgers zum Detektor von 0,05µm beziehungsweise, bei Bestimmung einer Dreh-Lage des Codeträgers, von 0,25 Bogensekunden zu erreichen, darf die Belichtungszeit eine Dauer von ungefähr 200ns nicht überschreiten. Bei Messeinrichtungen des Standes der Technik würde allerdings bei einer Belichtungszeit von nur 200ns die Intensität der auf den Detektor projizierten Strahlen nicht ausreichen, um den Positionscode auszulesen. So könnten bei Einrichtungen des Standes der Technik die eigentlich wünschenswerten, entsprechend kurzen Belichtungszeiten zwar durch einen Einsatz von hoch intensiven Strahlungsquellen ermöglicht werden, allerdings weisen solche Strahlungsquellen einen vergleichsweise hohen Energieverbrauch auf, sind für diese Anwendung ungeeignet und zusätzlich in der Herstellung aufwendig.

Ein weiterer Vorteil von kürzeren Belichtungszeiten ist die Möglichkeit, die Lage des Codeträgers mit höheren Frequenzen auszulesen. Durch den Gebrauch neuartiger Sensoren wäre sensorbedingt inzwischen eine Auslesegeschwindigkeit von mehr als 30MHz erreichbar.

Eine Aufgabe der Erfindung ist somit die Bereitstellung eines Lagemessverfahrens und einer Lagemesseinrichtung, die eine schnellere Lagemessung und/oder eine erhöhte Messgenauigkeit ermöglichen.

Hierbei wird eine Verwendung gattungsgemässer, wenig aufwendig herstellbarer Strahlungsquellen angestrebt.

Eine weitere Aufgabe ist eine Verringerung von unerwünschten Intensitätsschwankungen der optischen Strahlen bei der Abbildung des Codes auf dem Erfassungselement.

Diese Aufgaben werden erfindungsgemäss durch die kennzeichnenden Merkmale der Ansprüche 1 und 6 gelöst. Vorteilhafte und alternative Ausgestaltungen und Weiterbildungen des Lagemessverfahrens und der Lagemesseinrichtung ergeben sich aus den Merkmalen der Unteransprüche.

Bei einem erfindungsgemässen Lagemessverfahren emittiert eine Beleuchtungsquelle optische Strahlung auf einen relativ zu einem Erfassungselement mit einem Freiheitsgrad bewegbaren Codeträger, der einen optisch erfassbaren Positionscode trägt. Die Beleuchtungsquelle, der bewegbare Positionscode und das Erfassungselement sind so angeordnet, dass eine optisch erfassbare Abbildung eines von der Relativposition des Codeträgers zur Beleuchtungsquelle abhängigen Teiles des Positionscodes auf dem Erfassungselement, das mehrere definierte Empfangsbereiche aufweist, erzeugt wird. Je nach empfangener Strahlung innerhalb der einzelnen Erfassungsbereiche werden Signale mit Strahlungsempfangsinformationen erzeugt, wobei ein Null-Signal gegebenenfalls als Information für einen Empfang keiner Strahlung verwendet werden kann. Anhand eines Auswertens der Signale wird der Code ausgelesen und eine relative Lage des Codeträgers zum Erfassungselement abgeleitet.

Erfindungsgemäss wird dabei mindestens ein Teil der emittierten Strahlung mittels eines fokussierenden Elements definiert auf die Empfangsbereiche fokussiert. Dadurch erhöht sich die Intensität der auf dem Erfassungselement auftreffenden Strahlung. Insbesondere wird die Strahlung in einer ersten Ebene fokussiert, die senkrecht zur Längsachse des Erfassungselements ausgerichtet ist. Dadurch werden unerwünschte Intensitätsschwankungen der Strahlung entlang einer senkrecht zur Längsachse des Erfassungselements ausgerichteten Achse homogenisiert und somit die Messgenauigkeit der relativen Lage des Codeträgers verbessert. In einer insbesondere zur ersten Ebene senkrechten, zweiten Ebene kann die Strahlung entweder kollimiert, aufgeweitet, ebenso fokussiert oder gar nicht umgeformt werden.

Da sich durch die Bewegung des Codeträgers relativ zum Erfassungselement die auf das Erfassungselement projizierte Codeabbildung zeitlich ändern kann, wirken sich lange Belichtungszeiten negativ auf die Auslesbarkeit des Codes aus. Durch die erfindungsgemässe Fokussierung der erzeugten Abbildung auf die Empfangsbereiche können nun Belichtungszeiten von weniger als 200ns genügen, um anhand der empfangenen Strahlung den abgebildeten Code auszulesen. Diese erfindungsgemäss realisierbare kurze Belichtungszeiten ermöglichen sehr hohe Auslesefrequenzen, eine Verbesserung der Auslesbarkeit des Codes, die abhängig von der Belichtungszeit durch die Bewegung des Codeträgers relativ zum Erfassungselement negativ beeinflusst wird, und eine Erhöhung der Messgenauigkeit der Lage.

Vorzugsweise ist der Codeträger rotatorisch oder entlang einer Achse relativ zum Erfassungselement bewegbar. Als relative Lage des Codeträgers werden dann ein Winkel beziehungsweise eine Länge erfasst.

Die Strahlungsquelle und das Erfassungselement können gegenüberliegend jeweils auf einer eigenen Platine oder nebeneinander auf einer gemeinsamen Platine angeordnet sein. In beiden Fällen kann das erfindungsgemässe Fokussieren der Strahlung im Strahlgang vor oder nach dem Codeträger erfolgen. Beispielsweise sind in einer Ausführungsform die Strahlungsquelle und das Erfassungselement auf einer gemeinsamen Platine angeordnet.

Die Strahlungsquelle emittiert divergente Strahlung auf den Codeträger, wodurch eine Abbildung des Positionscodes erzeugt wird. Im Strahlgang nach dem Codeträger kann nun mittels eines als fokussierendes Element ausgebildeten Umlenkelements die Abbildung des Codes auf das Erfassungselement fokussiert und umgelenkt werden. Ebenso möglich ist eine Anordnung des Codeträgers im Strahlgang nach dem fokussierenden Umlenkelement.

Das fokussierende Element ist grundsätzlich so ausgebildet, dass insbesondere divergent einfallende Strahlung gezielt auf die Empfangsbereiche des Erfassungselements fokussiert wird. Zum Beispiel können dafür reflektierende, brechende oder beugende optische Anordnungen, wie sie einem Fachmann auf diesem Gebiet bekannt sind, verwendet werden. Beispielsweise kann das fokussierende Element eine gekrümmte reflektierende Fläche aufweisen und somit zusätzlich als Umlenkelement fungieren. Eine weitere Möglichkeit ist eine Anordnung von zwei gegeneinander ausgerichteten Flächen, wobei mindestens eine Fläche davon gekrümmt ist.

Weitere beispielhafte Ausbildungen des fokussierenden Elements sind Zylinderlinsen, asphärische optische Elemente oder Fresnel-Optiken, die im Strahlgang vor oder nach dem Codeträger angeordnet sind und die optische Strahlung gezielt auf die Empfangsbereiche fokussieren.

Alternativ zur Anordnung des fokussierenden Elements vor oder nach dem Codeträger kann das fokussierende Element selbst als Codeträger ausgebildet sein. So könnte ein Positionscode auf mindestens eine Reflexionsfläche eines als fokussierendes Element ausgebildeten Umlenkelements aufgeprägt sein oder eine als fokussierendes Element ausgebildete Zylinderlinse einen Positionscode aufweisen.

Als Positionscode sind grundsätzlich jegliche Mittel zu verstehen, durch die eine optische Abbildung eines Codes in Abhängigkeit von der Dreh-Lage des Codeträgers relativ zum Erfassungselement erzeugt werden kann. Eine einfache Ausführung eines Codeträgers ist ein teildurchlässiges Element mit transmittiven und absorbierenden oder diffus streuenden Bereichen, die Markierungen des Codes darstellenden. Ebenso sind diffraktive und nicht diffraktive Bereiche als Markierungen möglich. Wird auf eine Teilfläche eines solchen Codeträgers Strahlung emittiert, so entsteht eine optisch auslesbare Schattenprojektion mit codierter Lageinformation. Durch ein Auslesen des Codes kann eine Lage des Codeträgers relativ zur Strahlungsquelle und/oder zum Erfassungselement abgeleitet werden.

Es besteht die Möglichkeit, sowohl eine absolute Codierung, als auch eine relative, d.h. inkrementelle, Codierung zu verwenden. Allerdings besteht bei relativen Codierungen der Nachteil, nach einem Stromausfall den Winkelmesser neu initialisieren zu müssen.

Zum Messen von Winkellagen ist der Codeträger insbesondere um eine Achse herum als Drehkörper, beispielsweise als flacher Zylinder oder Ring, ausgebildet. Zum Messen von beschränkten Winkelbereichen kann es genügen, den Codeträger als Zylinder- oder Ringsegment auszubilden. Für Längenmessungen weist Codeträger dagegen insbesondere eine längliche und flache quader- oder stabförmige Gestalt auf. Er kann aus Glas, Kunststoff oder anderem optisch transparenten Material, sowie auch aus nicht-transparentem Material mit Schlitzen und/oder Löchern gefertigt oder als diffraktives optisches Element ausgebildet sein. Erfolgt das Erzeugen eines Abbilds des Codes in Reflexion, so kann der Positionscode zum Beispiel durch reflektierende und absorbierende Bereiche als Markierungen ausgebildet sein.

Je nach gewählter Ausführungsform setzt sich der Positionscode aus mehreren in Umfangs- oder Achsrichtung beabstandeten Markierungen zusammen, die eine Codespur bilden, wobei der Positionscode auch mehrere solcher Spuren, die dann radial bzw. parallel beabstandet angeordnet sind, aufweisen kann.

Als Strahlungsquelle werden üblicherweise LED's, Glühlampen oder Laserdioden verwendet. Vorzugsweise werden Strahlungsquellen eingesetzt, die in der Herstellung wenig aufwendig sind und in grossen Mengen im Handel erhältlich sind. Grundsätzlich denkbar sind alle Arten von Quellen für optische Strahlung.

Als Erfassungselement können, wie aus dem Stand der Technik bekannt, vorzugsweise Sensorarrays, wie beispielsweise in einer Zeile aufgereihte Fotodioden, CCD- oder CMOS-Sensoren, aber auch Flächensensoren mit flächig angeordneten Fotodioden, CCD-, CMOS- oder PSD-Sensoren, verwendet werden.

Wird eine Laserdiode als Strahlungsquelle verwendet und ein Sensorarray als Erfassungselement, so ist überraschender Weise eine Anordnung und Ausrichtung der Laserdiode vorteilhaft, bei der die Längsachse der Emitterkante quer zur Längsachse des Sensorarrays ausgerichtet ist, da der Abstrahlwinkel quer zur Emitterkante grösser und somit eine homogenere Ausleuchtung des Codes erzielbar ist. Des Weiteren kann durch eine derartige Anordnung die Quelle näherungsweise als Punktlichtquelle betrachtet werden, wodurch ein höherer Kontrast in der Abbildung erreicht werden kann.

Die Anordnung von Codeträger und Abtasteinrichtung, die aus Strahlungsquelle, Erfassungselement und fokussierendem Element bestehen kann, ist derart, dass eine relative Bewegung mit einem Freiheitsgrad, insbesondere eine Relativ-Drehbewegung oder eine relative Längsbewegung entlang einer Achse, zwischen Codeträger und Abtasteinrichtung ermöglicht wird. Eine Drehbewegung erfolgt um eine Drehachse des Codeträgers und/oder der Abtasteinrichtung. Zum Beispiel ist der Codeträger um eine Achse drehbar angeordnet und dreht sich mit einem Element, dessen Winkelstellung erfasst werden soll, mit, während die Abtasteinrichtung fix positioniert ist. Ebenso möglich wäre ein Mitdrehen der Abtasteinrichtung mit dem Element, dessen Winkelstellung erfasst werden soll, während der Codeträger fest bleibt.

Ein Einsatzbereich für erfindungsgemässe Lagemesseinrichtungen sind geodätische Messinstrumente mit der Funktion der Richtungs- und Winkelbestimmung. So sind beispielsweise Theodoliten mit horizontalem und vertikalem Teilkreis und entsprechenden Ableseeinrichtungen ausgestattet, um Horizontal- und Vertikalwinkel mit höchster Genauigkeit messen zu können. Ebenso finden Lagemesseinrichtungen in Messmaschinen aller Art, wie z.B. Koordinatenmessmaschinen mit Gelenkarmen, Anwendung.

Die erfindungsgemässe Lagemesseinrichtung wird nachfolgend anhand von in den Zeichnungen schematisch dargestellten Ausführungsbeispielen rein beispielhaft näher beschrieben. Im Einzelnen zeigen
- Fig. 1: eine Ringscheibe als Codeträger mit einen optisch erfassbaren Positionscode nach dem Stand der Technik;
- Fig. 2: eine Lagemesseinrichtung des Standes der Technik, wobei ein Codeträger zwischen Beleuchtungsquelle mit Kollimationsoptik und Detektor angeordnet ist;
- Fig. 3: eine Lagemesseinrichtung des Standes der Technik mit einem Umlenkelement, wobei Beleuchtungsquelle und Detektor auf einer gemeinsamen Platine angeordnet sind;
- Fig. 4: eine 3-D-Ansicht einer ersten Ausführungsform einer erfindungsgemässen Lagemesseinrichtung;
- Fig. 5: eine 3-D-Ansicht einer zweiten Ausführungsform einer erfindungsgemässen Lagemesseinrichtung;
- Fig. 6: eine 3-D-Ansicht einer dritten Ausführungsform einer erfindungsgemässen Lagemesseinrichtung;
- Fig. 7: eine 2-D-Ansicht einer vierten Ausführungsform einer erfindungsgemässen Lagemesseinrichtung;
- Fig. 8: eine 2-D-Ansicht einer fünften Ausführungsform einer erfindungsgemässen Lagemesseinrichtung;
- Fig. 9: eine 2-D-Ansicht einer sechsten Ausführungsform einer erfindungsgemässen Lagemesseinrichtung;
- Fig. 10: eine 2-D-Ansicht einer siebten Ausführungsform einer erfindungsgemässen Lagemesseinrichtung;
- Fig. 11: eine 3-D-Ansicht einer achten Ausführungsform einer erfindungsgemässen Lagemesseinrichtung;
- Fig. 12: eine 3-D-Ansicht eines als fokussierendes Element ausgebildeten Codeträgers von oben;
- Fig. 13: eine 2-D-Ansicht einer Ausführungsform einer erfindungsgemässen Lagemesseinrichtung, wobei Strahlungsquelle und Erfassungselement gegenüberliegend angeordnet sind; und
- Fig. 14: eine 3-D-Ansicht einer erfindungsgemässen Lagemesseinrichtung zur Bestimmung einer Länge.

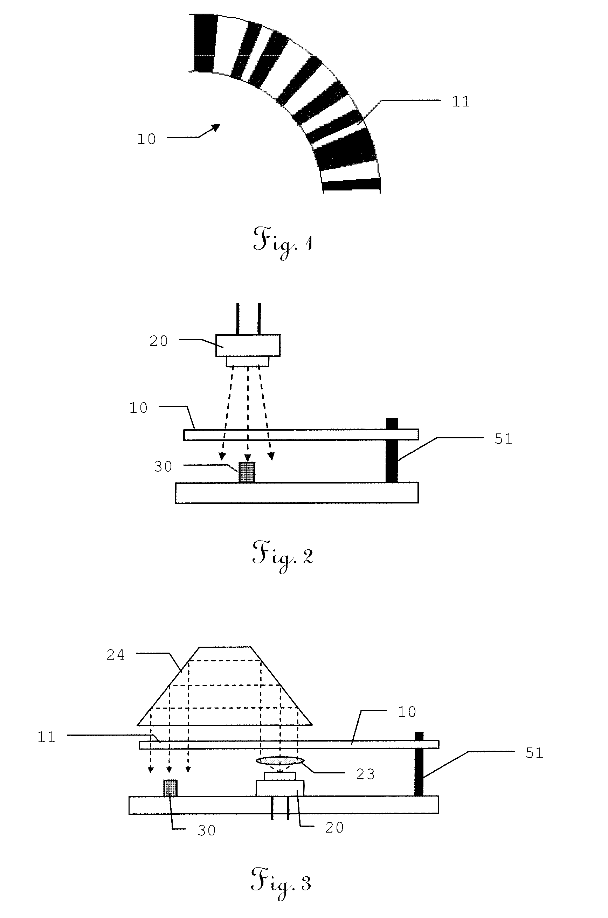

In Figur 1 ist ein Codeträger 10 mit einem optisch erfassbaren Positionscode 11 nach dem Stand der Technik zum Bestimmen einer Dreh-Lage dargestellt. Der Codeträger 10 ist als Ringsegment aus Kunststoff ausgebildet und weist als Positionscode 11 eine konzentrisch angeordnete Codespur auf. Die weissen Bereiche des Positionscodes 11 sind lichtdurchlässig und die schwarzen Bereiche lichtundurchlässig ausgebildet. Durch ein Anleuchten eines positionsabhängigen Teils des Codeträgers 10 kann eine Schattenprojektion mit codierter Information über den angeleuchteten Teil des Codeträgers 10, und somit mit Information über eine Dreh-Lage des Codeträgers 10 relativ zu einer beleuchtenden Strahlungsquelle, die in den folgenden Figuren gezeigt wird, erzeugt werden.

Figur 2 zeigt eine Lagemesseinrichtung zur Winkelbestimmung des Standes der Technik mit einer LED als Strahlungsquelle 20, die Strahlung auf einen Codeträger 10 emittiert. Die emittierte Strahlung ist durch die gestrichelten Linien dargestellt. Der Codeträger 10 weist einen von seiner Dreh-Lage abhängigen Code als Positionscode 11 auf und ist rotatorisch beweglich um eine Stange als Rotationsachse 51 ausgebildet. Wie in Figur 1 dargestellt kann der Codeträger 10 lichtdurchlässige und lichtundurchlässige Bereiche als Positionscode 11 aufweisen. Dadurch wird der Code mittels der kollimierten Strahlen auf ein gegenüber der Strahlungsquelle 20 angeordnetes Erfassungselement 30 abgebildet. Da relativ lange Belichtungszeiten verwendet werden, reicht die Intensität der auf dem Erfassungselement auftreffenden Strahlen aus, um den darauf abgebildeten Positionscode 11 auszulesen und daraus eine Dreh-Lage des Codeträgers 10 relativ zum fix positionierten Erfassungselement 30 abzuleiten. Bedingt durch die benötigte lange Belichtungszeit ist allerdings die Dreh-Lage nur mit entsprechend nach oben begrenzter Genauigkeit und Auslesefrequenz bestimmbar. Auch die Rotationsgeschwindigkeit des Codeträgers 10 ist - um Fehlmessungen zu vermeiden - bei langen Belichtungszeiten nach oben beschränkt.

Figur 3 zeigt, ähnlich wie in Figur 2 dargestellt, eine Lagemesseinrichtung zur Winkelbestimmung des Standes der Technik, allerdings sind nun die als Laserdiode ausgebildete Strahlungsquelle 20 und das Erfassungselement 30 auf einer gemeinsamen Platine nebeneinander angeordnet. Die anhand einer Linse 23 kollimierten Strahlen werden durch ein prismenförmiges Umlenkelement 24 des Standes der Technik umgelenkt, sodass durch den Positionscode 11 des Codeelements 10 eine lageabhängige Abbildung des Codes auf dem Erfassungselement 30 erzeugt wird. Das Umlenkelement 24 ist aus Kunststoff gefertigt und weist eine erste und eine zweite plane Fläche auf, an der jeweils auftreffende Strahlung total intern reflektiert wird, wobei die beiden Flächen gegeneinander angeordnete sind. Die in das Umlenkelement 23 einfallende Strahlung wird somit an der ersten Fläche auf die zweite Fläche und an dieser in Richtung des Codeelements 10 reflektiert. Die auf dem Erfassungselement 30 auftreffenden Strahlen, aus welchen eine codierte Positionsinformation des Codeträgers 10 auslesbar ist, können durch das Erfassungselement 30 empfangen werden. Anhand einer Auswertung der Intensitätsverteilung der empfangenen Strahlung kann die optische Positionsinformation decodiert und somit eine Dreh-Lage des Codeträgers 10 abgeleitet werden. Wie in der Beschreibung zu Figur 2 schon erwähnt, werden bei diesen Einrichtungen sich als nachteilig erweisende sehr lange Belichtungszeiten benötigt, um eine genügend hohe Intensität der auf dem Erfassungselement auftreffenden Strahlung zu erhalten, die den Code auslesbar macht.

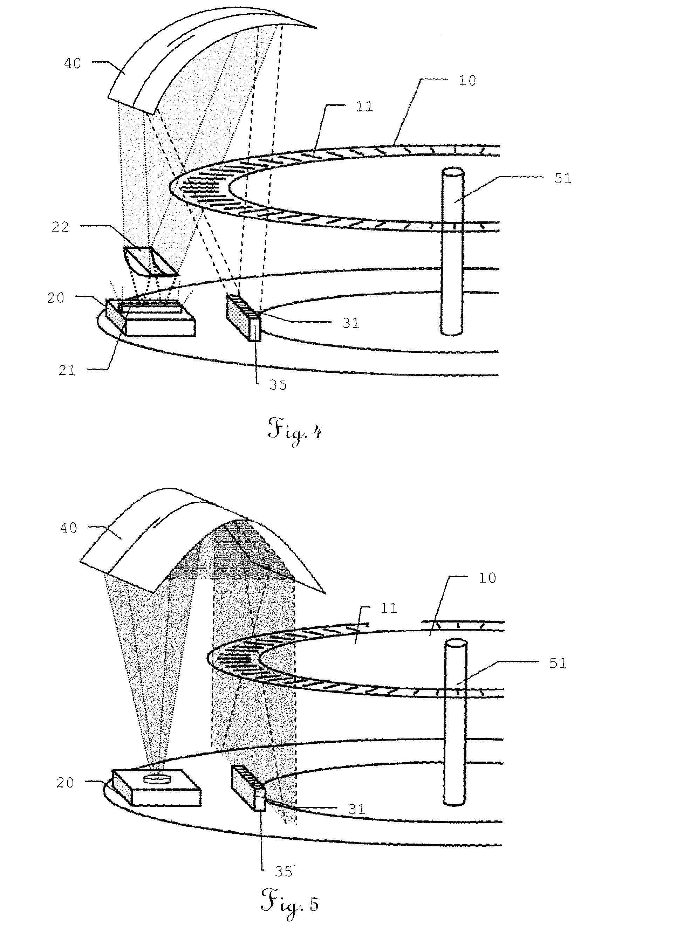

In Figur 4 ist ein erfindungsgemässes optoelektronisches Lagemessverfahren zum Bestimmen einer Dreh-Lage eines Codeträgers 10, der einen Positionscode 11 trägt, in einer 3-D-Ansicht gezeigt. Der Codeträger 10 ist, wie aus dem Stand der Technik bekannt und beispielsweise in Figur 1 gezeigt, als Ring und um die Achse 51 drehbar ausgebildet, was eine Rotationsbewegung relativ zu einem fix positionierten, als Sensorarray 35 ausgebildeten Erfassungselement ermöglicht. Der Positionscode 11 ist auf dem Codeträger 10 entlang eines Umfangs zur Achse 51 angeordnet.

Der Sensorarray 35 weist eine Vielzahl von in einer Zeile nacheinander angeordneten CMOS-Sensoren als lichtempfindliche Empfangsbereiche 31 auf. Die Anordnungsachse des Sensorarrays 35 ist quer zu einer zur Achse 51 radialen Richtung ausgerichtet. Eine Laserdiode als Strahlungsquelle 20 mit einer Emitterkante 21, deren Längsachsachse in zur Achse 51 radialer Richtung und somit quer zur Anordnungsachse des Sensorarrays 35 ausgerichtet ist, emittiert optische Strahlung. Der Laserdiode ist eine strahlformende Optik 22 nachgeordnet, die die emittierte Strahlung in einer Achse quer zur Ausrichtung der Emissionskante kollimiert.

Die in einer Achse divergente Strahlung wird durch ein gekrümmtes Umlenkelement auf den Sensorarray 35 fokussiert. Anhand des dem Sensorarray vorgeordneten Codeträgers 10 wird nun eine Projektion eines lageabhängigen Teiles des Positionscodes 11 erzeugt, die durch den Sensorarray erfassbar ist. Das Umlenkelement, das somit als fokussierendes Element 40 ausgebildet ist, weist dazu eine reflektierende Teilmantelfläche eines Zylinders als gekrümmte, reflektierende Fläche auf. Durch die Teilmantelfläche wird die Strahlung definiert in einer Achse quer zur Längsachse des Sensorarrays 35 fokussiert. Dadurch erhöht sich die Intensität der auf dem Sensorarray 35 auftreffenden, die Abbildung erzeugenden Strahlung. Zusätzlich werden für ein Auslesen des Positionscodes 11 nachteilige Intensitätsschwankungen der auf dem Sensorarray 35 auftreffenden Strahlung entlang der Achse quer zur Längsachse des Sensorarrays 35 homogenisiert.

Die CMOS-Sensoren erfassen die durch den Codeträger 10 erzeugte Abbildung, wobei für jeden einzelnen Sensor ein elektrisches Signal mit Strahlungsempfanginformation erzeugt wird. Anhand dieser Strahlungsempfanginformationen der einzelnen Sensoren kann der abgebildete Teil des Positioncodes 11 entschlüsselt werden und daraus eine Winkelstellung als relative Dreh-Lage des Codeträgers 10 zum Sensorarray 35 abgeleitet werden.

Das erfindungsgemäss erzielte Erhöhen der Intensität und Homogenisieren der unerwünschten Intensitätsschwankungen der auf dem Sensorarray 35 auftreffenden Strahlung ermöglicht eine Verkürzung der Belichtungszeit auf beispielsweise höchstens 1µs, insbesondere höchstens 200ns, und eine Verbesserung der Auslesbarkeit des Codes. Somit können beim erfindungsgemässen Verfahren trotz Verwendung einer handelsüblichen, wenig aufwendig herzustellenden Strahlungsquelle Dreh-Lagen genauer bestimmt werden als bei Verfahren des Standes der Technik. Zusätzlich kann der Codes mit höheren Frequenzen ausgelesen werden, was ein Anzeigen der präzisen Dreh-Lage nahezu in Echtzeit für einen Benutzer ermöglicht.

Anhand des erfindungsgemässen Verfahrens kann beispielsweise eine Rotationsbewegung eines Elements, dessen Winkellage bestimmt werden soll, auf den Codeträger 10 übertragen und dadurch die Winkellage dieses Elements abgeleitet werden. Das Element kann zum Beispiel ein Element einer geodätischen Vermessungsstation sein.

Figur 5 zeigt eine ähnliche Lagemesseinrichtung wie Figur 4, allerdings mit einer alternativen Ausführungsform des fokussierenden Umlenkelements 40 und mit einer LED als Strahlungsquelle 20. Gemäss Figur 5 weist das als fokussierendes Element 40 ausgebildete Umlenkelement eine reflektierende Fläche mit parabelförmiger Krümmung auf, wobei die Fläche in eine erste und eine zweite Teilfläche, getrennt durch eine durch die Scheitel der Parabeln gelegten Geraden, eingeteilt werden kann. Die divergent emittierte Strahlung wird durch eine Reflexion an der ersten Teilfläche in einer Ebene kollimiert und auf die zweite Teilfläche projiziert. Die zweite Teilfläche reflektiert die Strahlung in der einen Ebene konvergent auf den Codeträger 10, sodass eine gezielt fokussierte Abbildung eines positionsabhängigen Teiles des Positionscodes 11 auf dem Sensorarray 35 erzeugt wird.

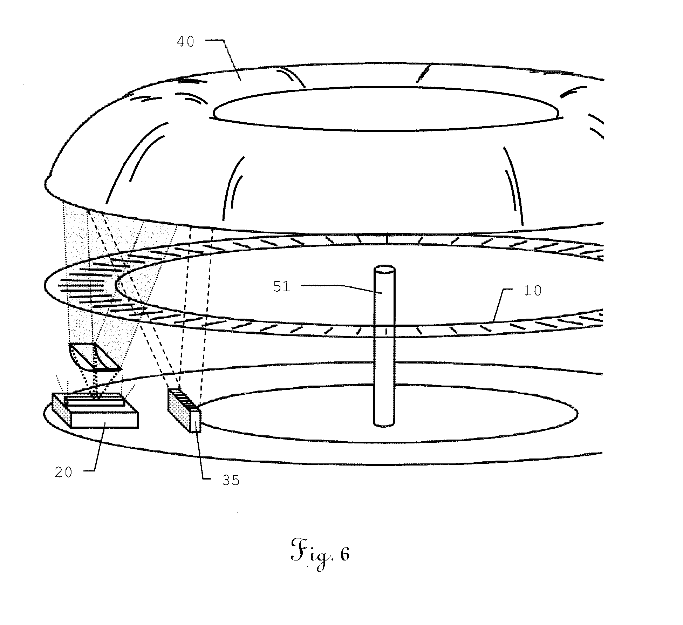

In Figur 6 ist eine erfindungsgemässe Lagemesseinrichtung, ähnlich der in Figur 4, dargestellt. Allerdings ist gemäss Figur 6 das fokussierende Element 40 als Rotationsfläche um die Achse 51 mit kreissehnenförmiger Krümmung ausgebildet. Die Innenfläche ist reflektierend und lenkt somit fokussierend die Strahlen auf den Sensorarray 35 um. Das fokussierende Element 40 kann nun zusammen mit dem Codeträger 10 relativ zur Platine, auf der die Strahlungsquelle und der Sensorarray angebracht sind, drehbar beweglich sein und lenkt in jeder Winkelstellung die Strahlung fokussierend auf den Sensorarray 35 um.

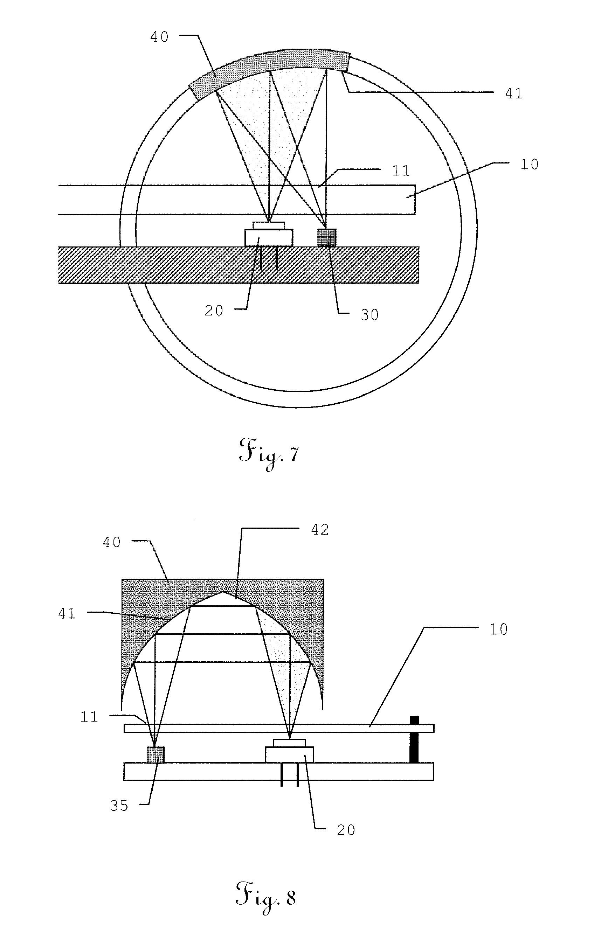

Figur 7 zeigt eine 2-D-Ansicht einer erfindungsgemässen Lagemesseinrichtung mit einem fokussierenden Element 40, ähnlich des in Figur 4 dargestellten. Der Codeträger 10 mit Positionscode 11 ist als ein flacher Zylinder aus Kunststoff ausgebildet und um die Hauptdrehachse des Zylinders relativ zur Platine, auf der eine als LED ausgebildete Strahlungsquelle 20 und das Erfassungselement 30 angebracht sind, rotatorisch beweglich. Figur 7 soll den Strahlgang der durch die Strahlungsquelle 20 emittierten Strahlung verdeutlichen und zeigt zur Veranschaulichung der Form des als Teilzylindermantel ausgebildeten fokussierenden Elements 40 einen Querschnitt des gesamten fiktiven Zylindermantels. Die Innenfläche 41 des Teilzylindermantels ist reflektierend ausgebildet und fokussiert die Strahlung beim Umlenken in einer Ebene definiert auf die Empfangsbereiche des Erfassungselements 30.

Figur 8 zeigt, ebenso wie Figur 7, eine 2-D-Ansicht einer erfindungsgemässen Lagemesseinrichtung zur Veranschaulichung des Strahlgangs, allerdings unter Verwendung eines fokussierenden Elements 40 in einer weiteren Ausführungsform. Das fokussierende Element 40 ist als Prisma mit dem in der Zeichnung dargestellten Querschnitt ausgebildet und besteht beispielsweise aus Kunststoff. Nach unten hin weist das fokussierende Element 40 eine erste 41 und eine zweite 42 gekrümmte, reflektierende Fläche auf, wobei die erste 41 und zweite 42 Fläche gegeneinander ausgerichtet sind, und fungiert somit auch als Umlenkelement. Die divergent auf die erste Fläche 41 einfallende und den Code abbildende Strahlung wird an der ersten Fläche 41 auf die zweite Fläche 42 reflektiert und dadurch im Wesentlichen in einer Ebene kollimiert. Die zweite Fläche 42 fokussiert anschliessend in Reflexion die Strahlung in der einen Ebene auf den Sensorarray 35, wobei durch einen dem Sensorarray 35 vorgeordneten Codeträger 10 eine auslesbare Projektion des Positionscodes 11 erzeugt wird.

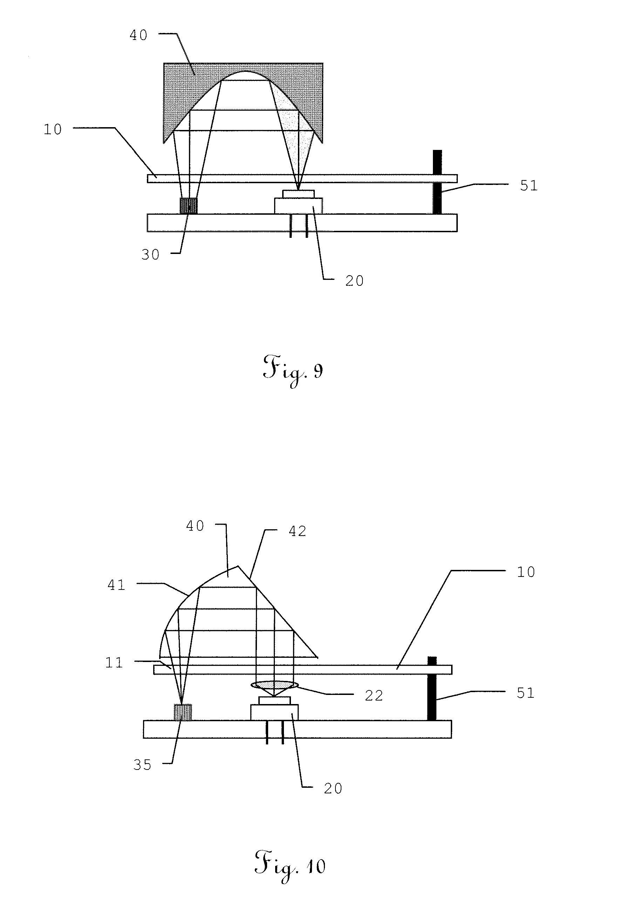

Figur 9 stellt eine erfindungsgemässe Lagemesseinrichtung in 2-D-Ansicht mit einem fokussierenden Element 40, ähnlich dem aus Figur 5, dar. Das fokussierende Element 40 hat eine reflektierende, eine parabelförmige Krümmung aufweisende Fläche. Das Erfassungselement 30 ist als Flächensensor aus aneinander angeordneten PSD-Sensoren ausgebildet, wobei jeder Sensor als Empfangsbereich definiert ist und ein Signal mit elektrischer Strahlungsempfanginformation erzeugt. Das fokussierende Element 40 mit seiner nach unten zeigenden reflektierenden Fläche ist so angeordnet und ausgebildet, dass die durch den Codeträger erzeugte Abbildung des Positionscodes gezielt auf die flächig aneinander angeordneten PSD-Sensoren fokussiert wird. Wie bereits beschrieben kann anhand der elektrischen Signale der einzelnen PSD-Sensoren der Code ausgelesen und somit eine Winkellage des um die Achse 51 beweglichen Codeträgers abgeleitet werden. Durch das erfindungsgemässe Fokussieren wird die Intensität der auf dem Flächensensor auftreffenden Strahlung erhöht und somit die Auslesbarkeit der Codeabbildung verbessert.

Figur 10 zeigt eine ähnliche Lagemesseinrichtung wie die in Figur 3 dargestellte Lagemesseinrichtung des Standes der Technik. Erfindungsgemäss weist jedoch das prismenförmige Umlenkelement nicht zwei plane Flächen auf, sondern eine plane 42 und eine gekrümmte 41 Fläche, an welchen jeweils auftreffende Strahlung total intern reflektiert wird. Somit ist das hier dargestellte Umlenkelement als fokussierendes Element 40 ausgebildet. Durch die Reflexion der den Code abbildenden Strahlung an der erfindungsgemäss gekrümmten Fläche 41 wird die Strahlung definiert auf das als Sensorarray 35 ausgebildete Erfassungselement fokussiert.

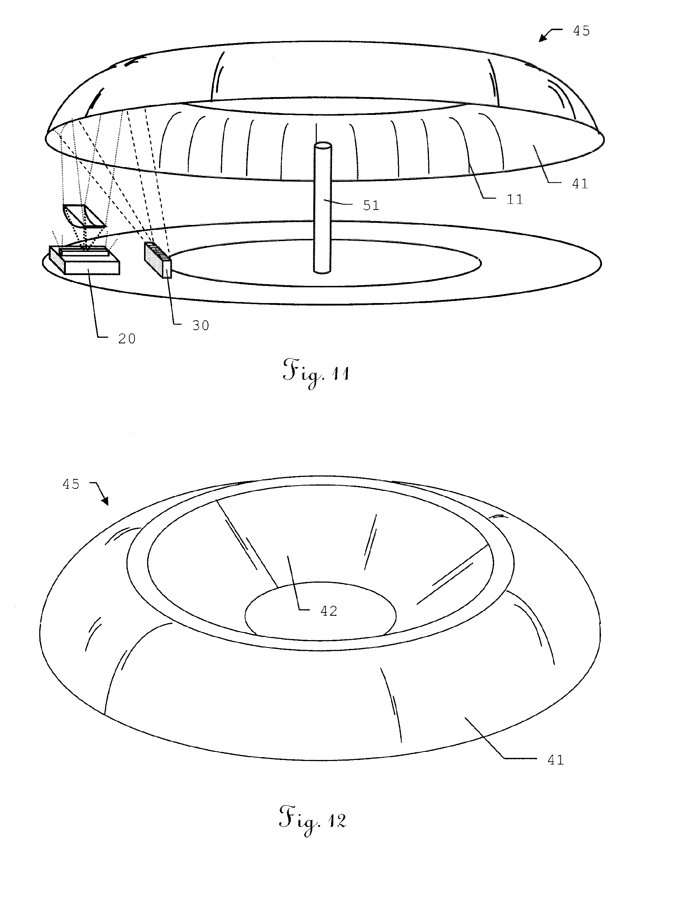

Figur 11 zeigt eine erfindungsgemässe Lagemesseinrichtung mit einem als Codeträger ausgebildeten fokussierenden Element 45. Das fokussierende Element 45 ist ähnlich dem in Figur 6 gezeigten fokussierenden Element ausgebildet, allerdings in einer anderen Perspektive abgebildet. Das hier dargestellte, zusätzlich als Codeträger ausgebildete fokussierende Element 45 weist an der nach unten zeigenden, reflektierenden Fläche 41 einen als Hologramm ausgebildeten Positionscode 11 entlang eines Umfangs zur Achse 51, um welche das fokussierende Element 45 drehbar ausgebildet ist, auf. Emittiert nun die Strahlungsquelle 20 optische Strahlung auf einen drehlageabhängigen Teil des fokussierenden Elements 45, so wird beim in Reflexion erfolgenden Fokussieren der Strahlung auf das Erfassungselement zusätzlich eine durch das Erfassungselement optisch erfassbare Abbildung eines entsprechenden Teiles des Positionscodes 11 erzeugt.

Figur 12 zeigt eine weitere Ausführung eines fokussierenden Elements 45, das zusätzlich als Codeträger ausgebildet ist, mit einem ähnlichen Querschnitt wie das in Figur 10 dargestellte fokussierende Element, in einer 3-D-Ansicht von schräg oben. Das hier dargestellte fokussierende Element 45 ist allerdings als Rotationskörper ringähnlich ausgebildet und weist auf der nach unten zeigenden reflektierenden Innenfläche 42 einen Positionscode auf. In einer erfindungsgemässen Lagemesseinrichtung könnte das dargestellte fokussierende Element 45 genau wie das in Figur 11 gezeigte angeordnet werden.

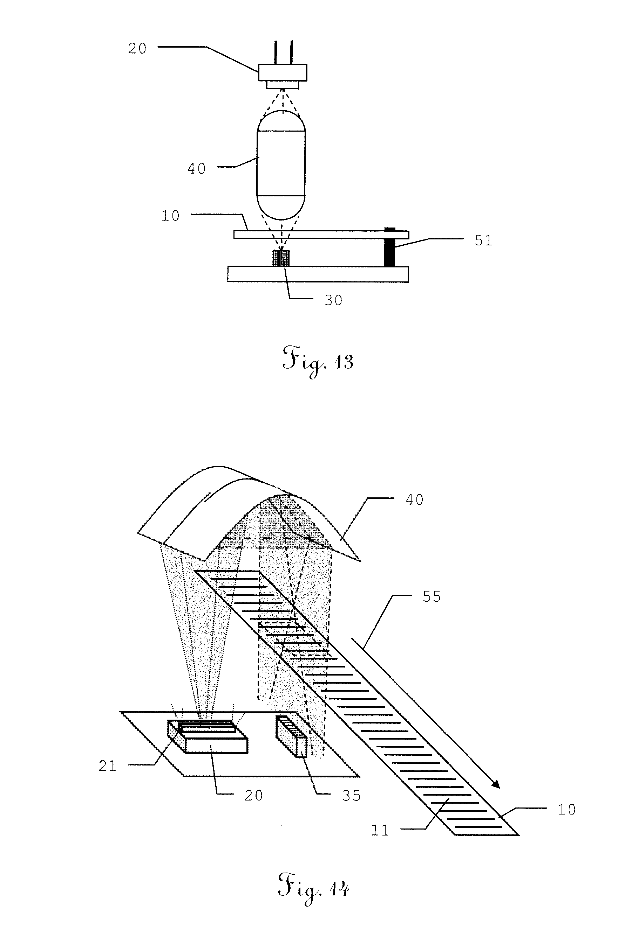

Figur 13 zeigt eine erfindungsgemässe Lagemesseinrichtung bei der die als LED ausgebildete Strahlungsquelle 20 gegenüber dem Erfassungselement 30 angeordnet ist, ähnlich wie in Figur 2 gezeigt. Allerdings wird nun erfindungsgemäss die Strahlung mittels eines fokussierenden Elements 40, welches aus zwei halben Zylinderlinsen und einem dazwischen angeordneten prismatischen bzw. polygonalen Glaskörper besteht, definiert auf die Empfangsbereiche des Erfassungselements 30 fokussiert und somit die Intensität der auf dem Erfassungselement auftreffenden Strahlung erhöht.

Figur 14 zeigt eine erfindungsgemässe Lagemesseinrichtung zur Bestimmung einer Länge entlang einer Achse. Dazu ist der Codeträger 10 als länglicher Quader ausgebildet und in Richtung seiner Längsachse 55 beweglich. Der Positionscode 11 ist entlang einer zur Längsachse 55 parallelen Achse angebracht. Eine als Laserdiode ausgebildete Strahlungsquelle 20 emittiert optische Strahlung, die durch ein fokussierendes Umlenkelement 40 umgelenkt und gezielt auf einen Sensorarray 35 in einer Ebene fokussiert wird, wobei durch den dem Sensorarray 35 vorgeordneten Codeträger 10 eine Projektion eines lageabhängigen Teiles des Positionscodes 11 auf dem Sensorarray 35 entsteht.

Die in Figur 14 dargestellte Ausführungsform kann beispielsweise eingesetzt werden für Koordinatenmessmaschinen mit einem Abtastarm zum Abtasten einer Probe, wobei der Abtastarm unabhängig voneinander in drei zueinander senkrechte Richtungen beweglich ist. Die durch den Abtastarm beim Abtasten zurückgelegten Strecken können nun erfindungsgemäss mit einer verbesserten Genauigkeit bestimmt und somit eine Oberflächenstruktur der Probe genauer abgeleitet werden.

Es versteht sich, dass diese dargestellten Figuren nur Beispiele möglicher Ausführungsformen darstellen.

## Patentansprüche

1. Optoelektronisches Lagemessverfahren zum Bestimmen einer Lage, insbesondere eines Winkels oder einer Länge, eines Codeträgers (10), der einen Positionscode (11) trägt und relativ zu einem Erfassungselement (30) mit einem Freiheitsgrad, insbesondere rotatorisch oder entlang einer Achse, beweglich ist, wobei das Erfassungselement (30) mehrere lichtempfindliche Empfangsbereiche (31), insbesondere einen Sensorarray (35), aufweist, mit
• einem Erzeugen einer von der Lage des Codeträgers (10) abhängigen Projektion eines Teiles des Positionscodes (11), wobei das Erzeugen mindestens
□ ein Emittieren von optischer Strahlung auf den Codeträger (10) und
□ ein Erfassen der Projektion durch das Erfassungselement (30)
beinhaltet, und
• einem Ableiten der Lage des Codeträgers (10) relativ zum Erfassungselement (30) aus der Projektion,
**gekennzeichnet durch**
ein gezieltes Fokussieren wenigstens eines Teiles der optischen Strahlung auf die Empfangsbereiche (31) beim Erzeugen der Projektion.

2. Optoelektronisches Lagemessverfahren nach Anspruch 1,
**dadurch gekennzeichnet, dass**
der Codeträger (10) um eine dem Erfassungselement (30) starr zugeordnete Achse (51) rotatorisch beweglich ist und als Lage mindestens ein Winkel des Codeträgers um die Achse (51) abgeleitet wird.

3. Optoelektronisches Lagemessverfahren nach einem der vorangehenden Ansprüche,
**dadurch gekennzeichnet, dass**
das Fokussieren in Reflexion oder durch Brechung erfolgt.

4. Optoelektronisches Lagemessverfahren nach einem der vorangehenden Ansprüche,
**dadurch gekennzeichnet, dass**
das Fokussieren von divergenter optischer Strahlung erfolgt.

5. Optoelektronisches Lagemessverfahren nach einem der vorangehenden Ansprüche,
**dadurch gekennzeichnet, dass**
das Erfassungselement (30) als Sensorarray (35) ausgebildet ist und das Fokussieren in einer senkrecht zur Längsachse des Sensorarrays (35) ausgerichteten Ebene erfolgt.

6. Optoelektronische Lagemesseinrichtung für ein Lagemessverfahren nach einem der Ansprüche 1 bis 5, mit
• einem Codeträger (10), der einen optisch erfassbaren Positionscode (11) trägt,
• einer Strahlungsquelle (20) zur Emission von optischer Strahlung auf den Codeträger (10), insbesondere mit einer nachgeordneten, strahlformenden Optik (22), und
• einem Erfassungselement (30) mit einer Vielzahl von lichtempfindlichen Empfangsbereichen (31), insbesondere einem Sensorarray (35), zum Empfang wenigstens eines Teiles der optischen Strahlung, wodurch ein vom Positionscode (11) abhängiges Abtastsignal erzeugbar ist und somit eine Lage des Codeträgers (10) relativ zum Erfassungselement (30) erfassbar ist,
wobei die Strahlungsquelle (20) und das Erfassungselement (30) in fester räumlicher Beziehung angeordnet sind und der Codeträger (10) relativ zum Erfassungselement (30) mit einem Freiheitsgrad, insbesondere rotatorisch oder entlang einer Achse, beweglich ist,
**gekennzeichnet durch**
ein im Strahlgang vor oder nach dem Codeträger (10) angeordnetes oder als Codeträger (10) ausgebildetes fokussierendes Element (40) zur Fokussierung mindestens eines Teils der optischen Strahlung auf die Empfangsbereiche (31).

7. Optoelektronische Lagemesseinrichtung nach Anspruch 6,
**dadurch gekennzeichnet, dass**
• die Strahlungsquelle (20) und das Erfassungselement (30) auf einer gemeinsamen, im Wesentlichen senkrecht zur Emissionsachse der Strahlungsquelle ausgerichteten Ebene angeordnet sind und
• ein Umlenkelement zur Umlenkung der Strahlung im Strahlgang angeordnet ist.

8. Optoelektronische Lagemesseinrichtung nach Anspruch 7,
**dadurch gekennzeichnet, dass**
das Umlenkelement als fokussierendes Element (40) ausgebildet ist.

9. Optoelektronische Lagemesseinrichtung nach einem der Ansprüche 8,
**dadurch gekennzeichnet, dass**
das als fokussierendes Element (40) ausgebildete Umlenkelement mindestens eine gekrümmte, reflektierende erste Fläche (41), insbesondere mit einer kreisabschnittförmigen oder parabelförmigen Krümmung, aufweist.

10. Optoelektronische Lagemesseinrichtung nach Anspruch 9,
**dadurch gekennzeichnet, dass**
das als fokussierendes Element (40) ausgebildete Umlenkelement eine reflektierende, insbesondere gekrümmte, zweite Fläche (42) aufweist, wobei die erste Fläche (41) und die zweite Fläche (42) gegeneinander ausgerichtet sind, zur Reflexion von einfallender Strahlung an den beiden Flächen (41,42) auf die Empfangsbereiche (31).

11. Optoelektronische Lagemesseinrichtung nach Anspruch 6 oder 7,
**dadurch gekennzeichnet, dass**
das fokussierende Element (40) als Zylinderlinse, insbesondere aus zwei halben Zylinderlinsen mit einem dazwischen angeordneten prismatischen Glaskörper, ausgebildet ist.

12. Optoelektronische Lagemesseinrichtung nach einem der Ansprüche 6 bis 11,
**dadurch gekennzeichnet, dass**
• der Codeträger (10)
□ quader- oder stabförmig ausgebildet ist und
□ in Richtung seiner Längsachse (55) beweglich ist, wobei der Positionscode (11) zumindest teilweise entlang einer zur Längsachse (55) parallelen Achse angeordnet ist, und
• als Lage eine Länge entlang der Längsachse (55) ableitbar ist.

13. Optoelektronische Lagemesseinrichtung nach einem der Ansprüche 6 bis 11,
**dadurch gekennzeichnet, dass**
• der Codeträger (10)
□ ring- oder scheibenförmig ausgebildet ist,
□ eine dem Erfassungselement (30) starr zuordenbare Achse (51) umgibt und
□ um die Achse (51) rotatorisch beweglich ist, wobei der Positionscode (11) zumindest entlang eines Teilumfangs zur Achse (51) angeordnet ist, und
• als Lage ein Winkel des Codeträgers (10) um die Achse (51) ableitbar ist.

14. Optoelektronische Lagemesseinrichtung nach einem der Ansprüche 6 bis 13,
**dadurch gekennzeichnet, dass**
die Strahlungsquelle (20) als Laserdiode mit einer Emitterkante (21) ausgebildet ist, insbesondere wobei die Längsachse der Emitterkante (21) im Wesentlichen quer zur Anordnungsachse des Erfassungselements (30) ausgerichtet ist.
